# EUROPÄISCHE PATENTSCHRIFT

(11) **EP 0 543 824 B1**
(45) Veröffentlichungstag und Bekanntmachung des Hinweises auf die Patenterteilung: **30.08.1995**
(21) Anmeldenummer: 91911440.5
(22) Anmeldetag: 15.06.1991
(51) Int. Cl.: A01K 55/00

(54) **RAUCHERZEUGUNGSVORRICHTUNG**
SMOKE GENERATOR
DISPOSITIF FUMIGENE

(30) Priorität: 17.08.1990 DE 9011931 U; 06.03.1991 EP 91200478
(43) Veröffentlichungstag der Anmeldung: 02.06.1993
(73) Patentinhaber: Link, Hermann, D-47166 Duisburg (DE)
(72) Erfinder: Link, Hermann, D-47166 Duisburg (DE)
(74) Vertreter: Vomberg, Friedhelm, Dipl.-Phys.
(86) Internationale Anmeldenummer: DE9100500
(87) Internationale Veröffentlichungsnummer: WO9203043

(56) Entgegenhaltungen:
- DE-A- 3 835 948
- FR-A- 713 903

## Beschreibung

Die Erfindung betrifft eine Raucherzeugungsvorrichtung nach dem Oberbegriff des Anspruches 1.

Raucherzeugungsvorrichtungen der genannten Art werden zur Verbrennung von Gräsern oder ähnlichen Brennstoffen verwendet, die bei der Verbrennung Rauch erzeugen, der dem Imker ein ruhigeres Arbeiten an den Bienenvölkern ermöglicht, da die Bienen während der Rauchentstehung verstärkt Nahrung aufnehmen.

Der Nachteil der nach dem Stand der Technik bekannten Geräte besteht vor allen Dingen darin, daß die Zufuhr von frischer, sauerstoffenthaltender Luft nur unzureichend ist und somit schon kurze Zeit nach dem Entflammen des Verbrennungsgutes die Verbrennung erstickt. Darüber hinaus erweist sich auch innerhalb des Behälters die Luftzirkulation sowie die Luftabfuhr als verbrennungshemmend, da der entstehende Rauch nur unzureichend abzieht und es somit durch Kondensation der im Rauch enthaltenen Bestandteile zu einer das Feuer ebenfalls erstickenden Feuchtigkeitserhöhung kommt. Somit ergibt sich für den Imker die Notwendigkeit, die Raucherzeugungsvorrichtung nach Erloschen des Feuers wieder zu öffnen, ggf. das Verbrennungsgut auszutauschen und neu zu entflammen.

Zur Abhilfe einer vorzeitigen Flammenerstickung ist bereits vorgeschlagen worden, die Raucherzeugungsvorrichtung mit einem Blasebalg zu versehen, durch dessen Betätigung Luft in die Lufteinlaßkanäle gepumpt wird. Hiermit soll erreicht werden, daß eine drohende Flammen- oder Glimmerstickung verhindert wird. Allerdings können die unzureichende Rauchabfuhr sowie die mangelhafte Luftzirkulation hiermit nicht ausgeglichen werden.

Desgleichen sind mit der vorliegenden Erfindung Raucherzeugungsvorrichtungen angesprochen, die im Bereich des Deckels einen Pfeifenhals mit einem endseitigen Mundstück aufweisen, wobei der Pfeifenhals eine in den Deckelinnenraum mündende Düse aufweist, durch die Luft eingeblasen werden kann. Die Düse ist so gerichtet, daß sie in Richtung des Luftausgangskanals zeigt. Nach Entzünden des Verbrennungsgutes nimmt der in das Mundstück eingeblasene Luftstrom nach Art eines Venturirohres sogartig aus dem Behälterinnenraum dortige Gase mit, was zur Aufrecherhaltung der Verbrennung dienen soll. Allerdings ist es notwendig, ständig Luft einzublasen, um ein Ersticken der Verbrennung zu verhindern.

In der FR-A-713 903 wird zwar ein Raucherzeuger vorgeschlagen, der einen unteren Lufteinlaßkanal sowie einen oberen Luftauslaßkanal aufweisenden Behälter besitzt, in dem ein Innenbehältertopf zur Aufnahme des Verbrennungsgutes angeordnet ist, der sich im wesentlichen über die gesamte Höhe des Behälterinnenraumes erstreckt und der nach oben und unten durch Gitternetze begrenzt ist, wobei zwischen dessen Seitenwandung oder den Seitenwänden und der Behälterinnenwand ein ringförmiger Raum gebildet wird. Aber auch dieser Raucherzeuger hat den Nachteil, daß die seitlich an der Behälterinnenwand vorbeiführende Luftströmung zu Wirbelbildungen führen kann, die ein Be- und Entlüften des Innenraumes mit dem aus dem Verbrennungsprozeß stammenden Rauches behindern. Somit ist es bei diesem Raucher auch notwendig, ständig Luft einzublasen, um ein Ersticken der Verbrennung zu verhindern.

Es ist daher Aufgabe der vorliegenden Erindung, eine Rauchgaserzeugungsvorrichtung der eingangs genannten Art dahingehend weiterzubilden, daß der Luftzirkulationsverlauf im Verbrennungsraum zur Vermeidung einer Erstickung des Verbrennungsvorganges verbessert wird.

Diese Aufgabe wird durch die Raucherzeugungsvorrichtung nach Anspruch 1 gelöst, deren kennzeichnender Teil darin besteht, daß der Innenbehältertopf in mindestens einer Seitenwand oder seiner mantelförmigen Seitenwandung Luftdurchtrittsöffnungen aufweist.

Mit dem Innentopf, seiner Ausgestaltung und seiner Anordnung im Behälter wird zunächst einmal bewirkt, daß durch den Lufteinlaßkanal einströmende Luft zwangsweise in Richtung des Verbrennungsgutes geführt wird und nicht durch seitliches an der Behälterinnenwand vorbeiführendes Strömen eine Wirbelbildung auftritt, welche ein Erkalten des Rauches im Verbrennungsraum mit schädlicher Kondensation zur Folge hätte. Die durch Verbrennung hinsichtlich des Sauerstoffanteiles "verbrauchte" Luft kann erfindungsgemäß sowohl direkt nach oben abströmen als auch zum Teil durch die seitlichen Luftdurchtrittsöffnungen in einen Ringraum strömen, der nach oben ebenfalls in den Luftauslaßkanal mündet. Hierdurch ergibt sich eine doppelte Luft- und Rauchführung im Inneren des Behälters, der konstruktiv in mindestens zwei Kammern geteilt ist. Durch die Sicherstellung der notwendigen Luftzirkulation ist die Rauchentwicklung den Bedürfnissen angepaßt und gleichförmig, ohne daß die Verbrennung erstickt wird. Eine Zurhilfenahme eines Blasebalges oder ein ständiges Einblasen über ein Mundstück ist allenfalls zur Primärentfachung des Verbrennungsvorganges erforderlich, kann jedoch hiernach entfallen. Gleichermaßen wird auch eine übermäßige unerwünschte Rauchentwicklung, die im wesentlichen durch die vorbeschriebene Kondensation herbeigeführt wird, im Verbrennungsraum verhindert.

Weiterbildungen der Erfindung sind in den Unteransprüchen 2 bis 10 beschrieben.

So besitzt zur konstruktiven Vereinfachung der Behälter in seinem unteren Bereich sickenförmige, in den Innenraum ragende und sich ringförmig über den gesamten Innenmantel erstreckende Ausstülpungen, auf denen der Innenbehältertopf herausnehmbar aufliegt. Im einfachsten Fall sind die Ausstülpungen als Sick-Nut ausgebildet. Die einströmende Luft kann über die Luftdurchtrittsöffnungen im Innenbehältertopfboden am Verbennungsgut vorbeiströmend in den Innentopfbehälterinnenraum, die innere Luftkammer, gelangen. Die äußere Luftkammer ist ringförmig neben dem Innenbehältermantel als Zwischenraum zu dem Behälterinnenmantel gebildet, wobei diese Ring-Kammer keine direkte Verbindung zu einer etwaigen ersten Kammer unterhalb dem Innenbehältertopfboden oder zur Außenluft besitzt.

Nach einer weiteren Ausgestaltung der Erfindung sind die Seitenwand- oder Seitenwandung-Luftdurchtrittsöffnungen nur im unteren Bereich des Innentopfmantels angeordnet, während im oberen, durch mindestens ein Viertel der Bauhöhe bestimmten Bereich die Seitenwand oder -wandung vollflächig geschlossen ist. Hierdurch wird gewährleistet, daß die in die Ringkammer strömende Luft nicht im oberen Bereich in die zweite Kammer, die durch den Innentopfbehälterinnenraum gebildet wird, zurückströmen kann. Vorzugsweise erstreckt sich der mit Luftdurchtrittsöffnungen versehene untere Innentopfbereich auf maximal 50 %, weiterhin vorzugsweise auf ein Drittel der Bauhöhe des Innentopfes.Grundsätzlich ist die Ausbildung der Luftdurchtrittsöffnungen nicht auf eine konkrete Geometrie beschränkt, jedoch hat es sich als günstig - auch im Hinblick auf die Herstellung - erwiesen, wenn die Luftdurchtrittsöffnungen aus reihen- und zeilenweise angeordneten, vorzugsweise äquidistanten Bohrungen oder Schlitzen besteht. Der Bohrungsdurchmesser oder die Schlitzbreite beträgt vorzugsweise 3 mm bis 5 mm. In entsprechender Weise besitzt auch der Innenbehälterboden Bohrungen oder Schlitze, die dort vorzugsweise konzentrisch angeordnet sind.

Um sicher zu gewahrleisten, daß der ringförmige Raum zwischen dem Innentopfmantel und dem Behälterinnenmantel über den gesamten Querschnittsbereich einen konstanten Strömungsquerschnitt aufweist, besitzt der Innentopf an seinem oberen Ende mindestens drei radial abstehende Abstandshalter zu seiner Zentrierung in dem Behälter. Gegebenenfalls können diese Abstandshalter mit den vorbeschriebenen Ausstülpungen zusammenwirken, wenn diese, von oben betrachtet, eine gewissen Konizität aufweisen, die die untere Kante des Innenbehältertopfes ebenfalls zentrieren. Im einfachsten Fall können die genannten Abstandshalter als Umbördelungen der oberen Kante bzw. Kanten des Innentopfes ausgebildet sein.

Vorzugsweise wird der Behälter und der Innenbehälter als Zylinder oder Quader ausgebildet, jedoch sind auch hier andere mehreckige oder ovale, länglich runde oder ähnliche Querschnittsformen zulässig.

Der ringförmige Raum zwischen den Seitenwänden oder der Seitenwandung (bei einer Zylinderform) besitzt eine Querschnittsbreite von 5 bis 10 % des Innendurchmessers des Innenbehälters.

Der Behälterdeckel ist bevorzugt glocken- oder halbkugelförmig oder auch konisch ausgebildet. Die gerichtete Abströmung des Rauches wird erreicht, wenn der Deckel eine schräg nach oben gerichtete Auslaßtülle aufweist. Der Deckel kann auch einen Handgriff zum Öffnen besitzen, um das Herumklappen des Deckels zu erleichtern.

In einer ersten Ausführungsform besitzt die Raucherzeugungsvorrichtung unterhalb des Innenbehältertopfbodens einen von dem Außenbehälter gebildeten Raum, der mit Ausnahme eines Lufteinlaßkanals und der Luftdurchtrittsöffnungen im Innentopfbehälterboden weitgehend luftdicht, insbesondere gegen den Ringraum zwischen dem Innen- und dem Außenbehälter, abgeschlossen ist.

Alternativ hierzu kann jedoch dieser untere Raum entfallen, insbesondere wenn der Deckel mit einem eine Düse aufweisenden Pfeifenhals mit einem endseitigen Mundstück und einem Luftauslaßkanal ausgestattet ist. Vorzugsweise mündet die genannte Düse im oberen mittleren Bereich des Deckelinnenraumes und/oder ist auf den Luftauslaßkanal gerichtet. Weiterhin kann vor der Düse im Pfeifenhals ein einstellbares Durchlaßventil angeordnet sein. Bei Fortfall des genannten unteren Raumes endet der Innenbehältertopfboden etwa im Bereich des unteren Außenbehälterrandes oder geringfügig darüber. Weiterhin kann der Innenbehälterboden ringsum einen Kragen aufweisen, der mit dem Außenbehälterrand verbunden ist oder auf einer dortigen nach innen gerichteten ringförmigen Auflagefläche aufliegt.

Weiterhin vorzugsweise endet der Innentopf mit seiner oberen Kante geringfügig unter der durch den geschlossenen Deckelrand bestimmten Ebene, so daß nur eine schlitzförmige Durchgangsöffnung zum Deckelinnenraum bleibt, die ein Abströmen der Gase aus dem Ringzwischenraum durch den Luftaustrittskanal bzw. die Auslaßtülle herbeiführt, ohne daß Gefahr besteht, daß die Gase in den Innentopfbehälterinnenraum gelangen.

Bevorzugt wird die Raucherzeugungsvorrichtung als ein tragbares Handgerät ausgebildet und besitzt einen bügelartigen Handgriff, der auch als Hängevorrichtung gleichermaßen verwendbar ist. Die Raucherzeugungsvorrichtung kann jedoch auch am Außenbehältermantel zur befestigung von Clipverschlüssen, Karabinerhaken oder ähnlichem an einem Tragriemen Ösen aufweisen.

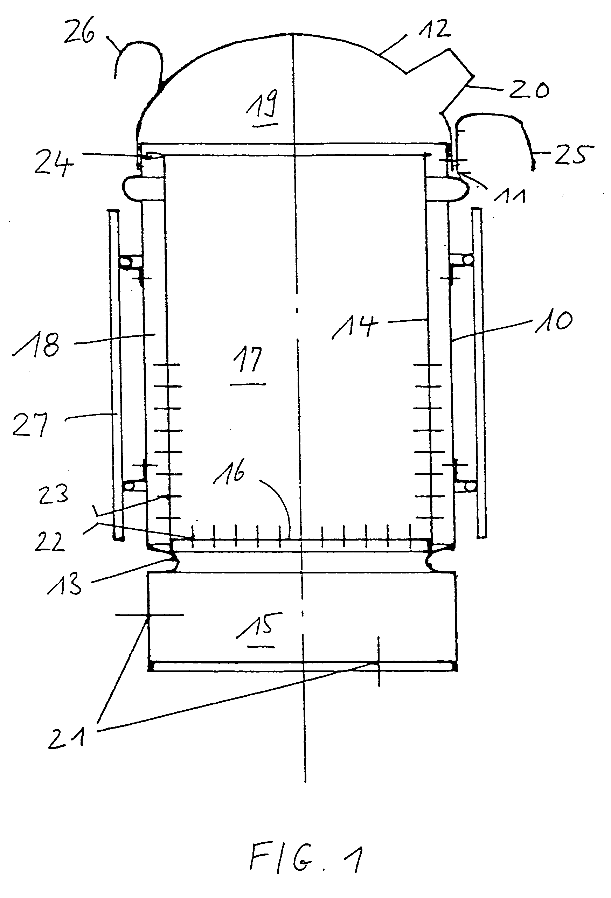

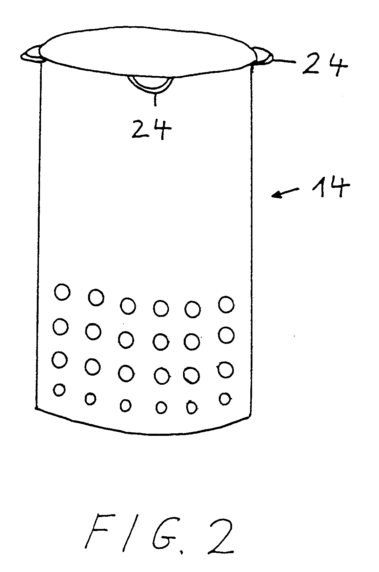

Ein konkretes Ausführungsbeispiel der Erfindung ist in den Figuren dargestellt. Es zeigen
- Fig. 1: eine schematische Querschnittsansicht einer als Handgerät ausgebildeten Raucherzeugungsvorrichtung und
- Fig. 2: eine perspektivische Ansicht des Innentopfes.
- Fig. 3: eine schematische Querschnittsansicht einer weite ren Ausführungsform mit einer Mundblaseinrichtung
- Fig. 4 a,b: jeweilige Varianten der Raucherzeugungsvorrichtung nach Fig.3
Das in Fig. 1 dargestellte Handgerät besteht im wesentlichen aus einem zylinderförmigen Außenbehälter 10, der topfförmig ausgebildet ist und an dessen oberer Kante über ein Scharnier oder Gelenk 11 ein im wesentlichen halbkugelförmiger Deckel 12 angelenkt ist, womit der Topf nach oben hin verschlossen werden kann. Der Behälter 10 besitzt eine im unteren Bereich angeordnete ringförmige Sick-Nut 13, die gleichzeitig als Auflage für den Innenbehältertopf 14 dient. Hierdurch werden drei Kammern geschaffen, nämliche eine erste untere Kammer 15, die nach oben hin durch den Innenbehältertopfboden 16 begrenzt und (bis auf die nachfolgend erläuterten Luftdurchtrittsöffnungen) abgeschlossen wird. Die zweite Kammer wird durch den Innenbehältertopfinnenraum 17 gebildet, die von der dritten Kammer, dem Ringraum 18 zwischen dem Innenbehältertopf 14 und dem Behälter 10 gebildet wird. Die Kammern 17 und 18 münden nach oben hin in den durch den Deckel 12 gebildeten Raum 19, von wo aus die Luft bzw. der Rauch über den Luftauslaßkanal, im vorliegenden Fall die Auslaßtülle 20 abströmen kann. Der untere Bereich des Behälters 10 weist eine oder mehrere Lufteinlaßkanäle 21 auf, durch die Luft von außen in die Kammer 15 strömen kann. Der Behälterboden 16 besitzt konzentrisch angeordnete Luftdurchtrittsöffnungen 22, die einen Luftübertritt von der Kammer 15 in die Kammer 17 ermöglichen. Die Innenbehältertopfseitenwand, die im vorliegenden Fall als Zylindermantel ausgebildet ist, besitzt im unteren Bereich etwa bis zur halben Bauhöhe ebenfalls Luftdurchtrittsöffnungen 23 in Form von reihen- und zeilenweise angeordneten Bohrungen (siehe Fig. 2). Durch diese Bohrungen 23 kann die Luft radial seitlich in den Ringraum 18 abströmen.

Um eine Zentrierung des Innenbehältertopfes 14 im Behälter 10 zu erreichen, besitzt der Innenbehältertopf an seiner oberen Kante radial abstehende Abstandshalter 24, die im einfachsten Fall auch als Umbördelungen der oberen Kante ausgeführt sein können.

Darüber hinaus weist die in Fig. 1 dargestellte Raucherzeugungsvorrichtung noch einen Handgriff 25 auf, der als Bügel ausgebildet ist und gleichzeitig als Aufhängevorrichtung benutzt werden kann. Am Deckel 12 ist ferner ein Griff 26 zum Öffnen desselben vorgesehen. Gegebenenfalls kann die Raucherzeugungsvorrichtung noch ein über den gesamten Umfang ausgebildetes Schutzgitter 27 besitzen, was jedoch weitgehend dadurch entbehrlich ist, weil die durch die Verbrennung erzeugte Wärmeabstrahlung bereits durch den Innentopfmantel gegenüber dem Behälter 10 abgeschirmt wird. Weiterhin kann an dem Behälter 10 oder an dem Gitter 27 noch ein nach dem Stand der Technik bekannter (nicht dargestellter) Blasebalg montiert werden. In einer konkreten Ausführungsform hat das Handgerät eine Bauhöhe von ca. 20 cm, wobei der Durchmesser des Außenbehälters etwa 7 bis 8 cm beträgt. Der Innentopfdurchmesser ist ca. 1 cm kleiner.

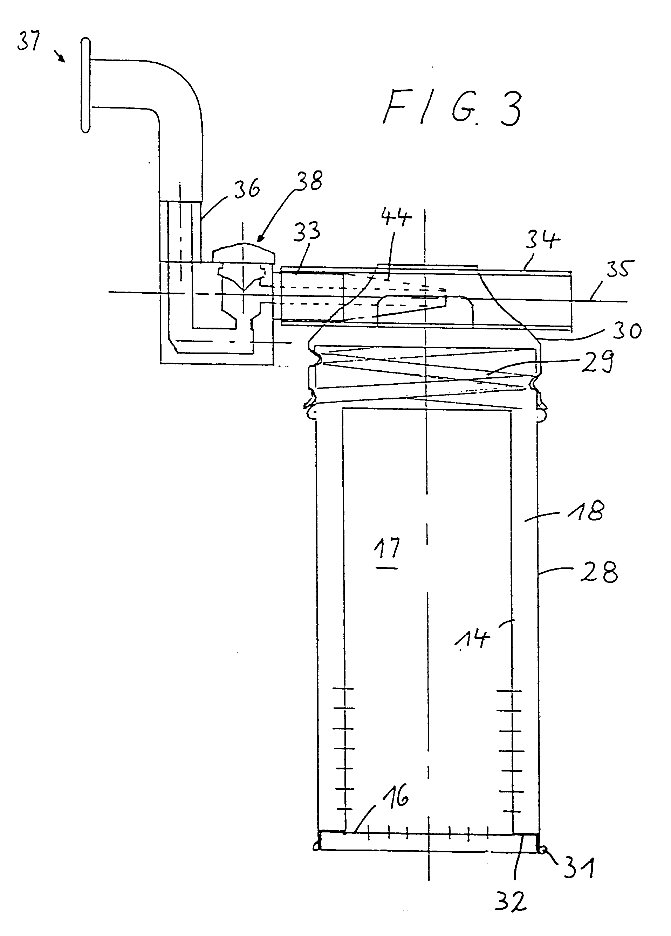

Eine Ausführungsform der Raucherzeugungsvorrichtung mit einer Mundblaseinrichtung zeigt Fig.3. Die Raucherzeugungsvorrichtung besitzt einen topfförmigen Behälter 28, an dessen oberer äußerer Mantelfläche ein Außengewinde oder eine entsprechende Ausnehmung eines Bajonett-Verschlusses angeordnet ist.Im Eingriff hiermit steht das Innengewinde bzw. die Ausstülpungen als Teil des erwähnten Bajonettverschlusses des Deckels 30, der über die mit 29 gekennzeichnete lösbare Verbindung mit dem Behälter 28 verbunden ist. Am unteren Rand ist der Außenbehälter über eine Umbördelung 31 als Verbindung mit einem entsprechenden ringförmigen Kragen 32 auf, der mit dem Boden 16 des Innentopfes 14 bzw. dessen unteren Mantelrand verbunden ist. Gegenüber der durch die Umbördelung gebildeten Ebene ist der Boden 16 leicht nach innen versetzt.

Der Deckel 30 weist zwei rohrförmige Ansatzstücke 33 und 34 auf, deren Längsachsen auf einer Geraden 35 liegen. In das Ansatzstück 33 ist ein Pfeifenhals 36 eingesteckt, dessen freies Ende ein Mundstück 37 besitzt. Der Pfeifenhals ist im gezeigten Beispiel U-förmig mit einem daran anschließenden Winkelstück ausgebildet, kann jedoch auch andere bei Pfeifen bekannte Formen haben. Im Pfeifenhals 36 ist ein einstellbares Durchlaßventil 38 vorgesehen, das im einfachsten Fall aus einer in ein entsprechendes Gewinde eingeschraubten Schraube besteht, die in den Durchlaßkanal des Pfeifenhalses hineinragt. Im Bereich des Ansatzstückes 33 ist der Pfeifenhalsdurchlaßkanal als Düse 44 ausgestaltet.

Bläßt man durch das Mundstück 37 Luft in den Deckelinnenraum, so reißt diese die im Innenraum 17 und dem Ringraum 18 befindlichen Gase sogartig mit, so daß diese über den Außlaß 34 abgeführt werden. Im übrigen entspricht der Aufbau dem der in Fig.1 dargestellten Ausführungsform bis auf den hier entfallenden unteren Raum 15.

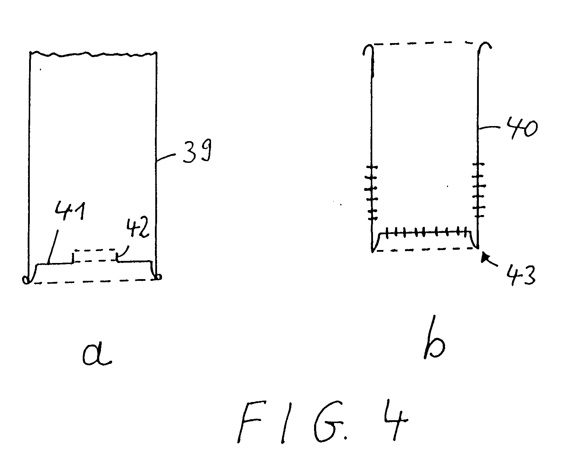

Die in Fig.4 a,b dargestellten Außen- und Innenbehälter 39 und 40 sind prinzipiell so wie zur Fig.3 beschrieben aufgebaut. Unterschiedlich ist lediglich die jeweilige Bodengestaltung. So besitzt der Außenbehälter 39 einen eigenen nach innen versetzten Ringboden 41, der zur Längsmittelachse hin in einer vertikalen Ringkante 42 endet. Der Innentopf 40 hat eine untere ringförmige Absetzkante 43, die auf dem Ringboden 41 aufgesetzt wird. Die Abstandshalter können beispielsweise auch als Vorrichtungen zum Einhängen in entsprechend ausgebildete Nuten oder ähnliches ausgebildet sein.

## Patentansprüche

1. Raucherzeugungsvorrichtung zur Verwendung in Imkereien, bestehend aus einem mindestens einen unteren Lufteinlaßkanal (21) sowie einen oberen Luftauslaßkanal (20) aufweisenden Behälter (10) mit einem abnehmbaren oder aufklappbaren Deckel oder einer schwenkbaren Öffnungsklappe und mit einem in dem Behälter angeordneten Innenbehältertopf zur Aufnahme des Verbrennungsgutes, der sich im wesentlichen über die gesamte Höhe des Behälterinnenraumes erstreckt und der im Boden (16) Luftdurchtrittsöffnungen aufweist und zwischen dessen Seitenwandung oder dessen Seitenwänden und der Behälterinnenwand ein ringförmiger Raum (18) gebildet ist, der mit dem Luftauslaßkanal (20) ebenso in Verbindung steht wie der nach oben offene Innenbehältertopfinnenraum,
**dadurch gekennzeichnet**,
daß in der Innenbehältertopf in mindestens einer Seitenwand oder seiner mantelförmigen Seitenwandung Luftdurchtrittsöffnungen (22, 23) aufweist.

2. Raucherzeugungsvorrichtung nach Anspruch 1, dadurch gekennzeichnet, daß der Behälter (10) in seinem unteren Bereich sickenförmige in den Innenraum ragende und sich ringförmig über den gesamten Innenmantel erstreckende, vorzugsweise als Sick-Nut (13) ausgebildete Ausstülpungen (13) aufweist, auf denen der Innenbehältertopf (14) herausnehmbar aufliegt.

3. Raucherzeugungsvorrichtung nach einem der Ansprüche 1 oder 2, dadurch gekennzeichnet, daß die Seitenwand- oder Seitenwandung-Luftdurchtrittsöfnungen (23) im unteren Bereich des Innentopfmantels angeordnet sind, der sich auf maximal 50 %, vorzugsweise ein Drittel der Bauhöhe des Innentopfes (14) erstreckt, und im oberen, durch mindestens ein Viertel der Bauhöhe bestimmten Bereich die Seitenwand oder -Wandung vollflächig geschlossen ist.

4. Raucherzeugungsvorrichtung nach Anspruch 3, dadurch gekennzeichnet, daß die Luftdurchtrittsöffnungen aus reihen- und und zeilenweise angeordneten, vorzugsweise äquidistanten Bohrungen oder Schlitzen besteht und/oder daß der Innenbehälterboden (16) konzentrisch angeordnete, vorzugsweise äquidistante Bohrungen (22) oder Schlitze aufweist, wobei der Bohrungsdurchmesser oder die Schlitzbreite vorzugsweise 3 mm bis 5 mm beträgt.

5. Raucherzeugungsvorrichtung nach einem der Ansprüche 1 bis 8, dadurch gekennzeichnet, daß der Innentopf (14) an seinem oberen Ende mindestens drei radial abstehende Abstandshalter (24), die vorzugsweise als Umbördelung der oberen Kante ausgebildet sind, zu seiner Zentrierung im Behälter (10) aufweist.

6. Raucherzeugungsvorrichtung nach einem der Ansprüche 1 bis 5, dadurch gekennzeichnet, daß der Behälter (10) und der Innenbehältertopf (14) im wesentlichen zylinder- oder quaderförmig ausgebildet sind und/oder der Behälter (10) durch einen Glocken- oder halbkugelförmigen oder konischen Deckel (12) nach oben verschließbar ist, der vorzugsweise eine schräg nach oben gerichtete Auslaßtülle (20) und/oder einen Handgriff zum Öffnen aufweist, und/oder der Deckel (30) mit einem eine Düse (44) aufweisenden Pfeifenhals (36) mit einem endseitigen Mundstück (37) und einem Luftauslaßkanal(34) ausgestattet ist.

7. Raucherzeugungsvorrichtung nach Anspruch 6, dadurch gekennzeichnet, daß die Düse im oberen mittleren Bereich des Deckelinnenraumes mündet und/oder in Richtung auf den Luftauslaßkanal (34) gerichtet ist und daß vorzugsweise vor der Düse im Pfeifenhals (36) ein einstellbares Durchlaßventil (38) angeordnet ist.

8. Raucherzeugungsvorrichtung nach Anspruch 6 oder 7, dadurch gekennzeichnet, daß der ringförmige Raum (18) zwischen den Seitenwänden oder der Seitenwandung eine Querschnittsbreite von 5 bis 10 % des Innendurchmessers des Innenbehältertopfes (14) aufweist und/oder daß der unterhalb des Innenbehältertopfbodens (16) mit dem Behälter (10) gebildete Raum (15) mit Ausnahme des Lufteinlaßkanals (21) und der Luftdurchtrittsöffnungen (22) einen unteren, weitgehend luftdicht abgeschlossenen Raum (15) bildet.

9. Raucherzeugungsvorrichtung nach einem der Ansprüche 1 bis 8, dadurch gekennzeichnet, daß der Innenbehältertopfboden (16) etwa im Bereich des unteren Außenbehälterrandes endet, wobei vorzugsweise der Innenbehälterboden ringsum einen Kragen (32) aufweist, der mit dem unteren Außenbehälterrand verbunden ist oder auf einer dortigen nach innen gerichteten ringförmigen Auflagefläche (41) aufliegt und/oder der Innentopf (14) mit seiner oberen Kante geringfügig unter der durch den geschlossenen Deckelrand bestimmten Ebene endet.

10. Raucherzeugungsvorrichtung nach einem der Ansprüche 1 bis 9, dadurch gekennzeichnet, daß diese als tragbares Handgerät ausgebildet ist und/oder einen bügelartigen Handgriff (25) besitzt, der vorzugsweise als Hängevorrichtung ausgestaltet ist.

## Claims

1. A smoke generating device for use in apiaries, the device comprising a container (10) having at least one lower air inlet channel (21), an upper air discharge channel (20) and a detachable or hinged cover atop the container or a pivoted opening lid, an inner container pot adapted to accommodate the material to be burned, said pot being disposed in the container and extending over substantially the entire height of the container interior, said inner container pot being provided with air passage openings in its bottom (16), the pot being positioned within the container so as to form an annular chamber (18) between the side wall or side walls of the pot and an inner wall surface of the container, said annular chamber (18) and upwardly open interior of the inner container pot being in communication with the air discharge channel (20) characterized in that the inner container pot has air passage openings (22, 23) in at least one side wall or in its cylindrical side wall.

2. A smoke generating device according to claim 1, characterized in that the lower region of the container (10) is provided with preferably crimp-groove-like bulges (13) which project into the interior and extend annularly around the inner wall surface of the container with the inner container pot (14) resting removably on said bulges.

3. A smoke generating device according to claim 1 or 2, characterized in that the air passage openings (23) in the side wall or side walls are disposed in the lower region of the inner container pot extending to a maximum of 50 %, preferably one third, of the structural height of the inner container pot and, in the upper region defined by at least one quarter of the structural height, the side wall or walls are closed fully.

4. A smoke generating device according to claim 3, characterized in that the air passage openings are composed of columns and rows of preferably equidistant bores or slots, and/or that the inner container pot bottom (16) is provided with concentrically arranged, preferably equidistant bores (22) or slots, wherein the bore diameter or the slot width is preferably between 3 mm and 5 mm.

5. A smoke generating device according to one of claims 1 to 4, characterized in that the inner container pot (14) is provided at its upper end with at least three radially projecting spacers (24) so as to center it in the container (10), said spacers are preferably configured as a flange around the upper edge of the inner container pot.

6. A smoke generating device according to one of claims 1 to 5, characterized in that the container (10) and the inner container pot (14) are essentially cylindrical or block shaped and/or the container (10) is closable at the top by a bell-shaped or hemispherical or conical cover (12), preferably including an oblique upwardly oriented discharge spout (20) and/or a handle for opening it, and/or the cover (30) is provided with a pipe-stem (36) having a nozzle (44) and a mouth-piece (37) at its end and an air-outlet-channel (34).

7. A smoke generating device according to claim 6, characterized in that the nozzle leads to the upper middle area of the cover interior and/or is directed to the air outlet channel (34) and that preferably an adjustable passage valve (38) is disposed in the pipe-stem upstream (36) of the nozzle.

8. A smoke generating device according to claim 6 or 7, characterized in that the annular chamber (18) between the side walls or the side wall has a cross-sectional width of 5 to 10 % of the inner diameter of the inner container pot (14) and/or that the space (15) formed below the inner container pot bottom (16) and with the container (10) is a lower chamber (15), which is, except for the air inlet channel (21) and the air passage openings (22), substantially airtight.

9. A smoke generating device according to one of claims 1, to 8, characterized in that the inner container pot bottom (16) ends approximately in the area of the container bottom, whereby preferably the inner container pot bottom has an annular collar (32), which is connected with the edge of the outer container edge or rests upon an annular bearing surface (41) on the interior of the container and/or the upper edge of the inner container pot (14) ends slightly under the level formed by the closed cover rim.

10. A smoke generating device according to one of claims 1 to 9, characterized in that it is configured as a portable hand-held device and/or is provided with a stirrup-like handle (25), preferably configured as a hook.

## Revendications

1. Dispositif fumigène destiné à l'utilisation dans des exploitations apicoles, se composant d'un réservoir (10) qui présente du moins un canal d'admission d'air inférieur (21) ainsi qu'un canal d'échappement d'air supérieur (20), qui est muni en sus d'un couvercle démontable ou relevable ou bien d'un volet d'ouverture pivotant ainsi que d'un pot disposé à l'intérieur et destiné à recevoir le matériau de combustion, qui s'étend pour l'essentiel sur toute la hauteur de l'intérieur du réservoir et dont le fond (16) présente des ouvertures de passage d'air, au-delà de ce fait ledit pot est disposé de telle sorte qu'entre sa paroi latérale ou ses parois latérales et la paroi intérieure du réservoir est formée une chambre annulaire (18), aussi bien ladite chambre que l'intérieur ouvert en haut du pot disposé à l'intérieur du réservoir étant en communication avec le canal d'échappement d'air (20),
**caractérisé par le fait,**
que le pot à l'intérieur du réservoir présente des ouvertures de passage d'air (22, 23) dans du moins une paroi latérale ou dans sa paroi latérale cylindrique.

2. Dispositif fumigène selon la revendication 1, caractérisé par le fait que la partie inférieure du réservoir (10) présente des excroissances en forme de bourrelets (13) réalisées de préférence en tant que rainure renflée (13), qui font saillie vers l'intérieur et s'etendent de façon annulaire sur l'ensemble de la surface latérale intérieure et sur lesquelles repose de manière enlevable le pot (14) disposé à l'intérieur du réservoir.

3. Dispositif fumigène selon l'une des revendications 1 ou 2, caractérisé par le fait que les ouvertures de passage d'air (23) réalisées dans la paroi latérale ou les parois latérales sont disposées dans la partie inférieure du pot disposé à l'intérieur du réservoir, ladite partie s'étendant jusqu'à 50 % au maximum, de préférence jusqu'à un tiers de la hauteur de construction du pot intérieur (14), et que dans la partie supérieure définie par du moins un quart de la hauteur de construction, la paroi latérale ou les parois latérales sont fermées sur toute la surface.

4. Dispositif fumigène selon la revendication 3, caractérisé par le fait que les ouvertures de passage d'air sont composées de perçages ou de fentes de préférence équidistants et disposés en lignes et en colonnes et / ou que le fond (16) du pot intérieur présente des perçages (22) ou des fentes de préférence équidistants et disposés de manière concentrique, le diamètre de perçage ou la largeur de fente étant de préférence compris entre 3 mm et 5 mm.

5. Dispositif fumigène selon l'une des revendications 1 à 8, caractérisé par le fait que l'extrémité supérieure du pot intérieur (14) présente du moins trois écarteurs (24) saillant de façon radiale qui sont conçus de préférence en tant que bord rabattu du bord supérieur, pour permettre ainsi le centrage dudit pot a' l'intérieur du réservoir (10).

6. Dispositif fumigène selon l'une des revendications 1 à 5, caractérisé par le fait qu'aussi bien le réservoir (10) que le pot a' l'intérieur du réservoir (14) présentent pour l'essentiel une forme cylindrique ou la forme d'un parallélépipède rectangle et / ou que le réservoir (10) peut être fermé en haut par le biais d'un couvercle en forme de cloche ou hémisphérique ou conique qui présente de sa part de préférence un bec d'échappement (20) dirigé de manière oblique vers le haut et / ou une poignée pour l'ouvrir, et / ou que le couvercle (30) est muni d'un col de sifflet (36) présentant une buse (44) ainsi qu'un embouchoir (37) à son extrémité et un canal d'échappement d'air (34).

7. Dispositif fumigène selon la revendication 6, caractérisé par le fait que la buse aboutit à la partie de milieu supérieure de l'intérieur du couvercle et / ou qu'elle est dirigée en direction du canal d'échappement d'air (34) et qu'une valve de passage (38) ajustable est disposée de préférence en amont de la buse dans le col de sifflet (36).

8. Dispositif fumigène selon la revendication 6 ou 7, caractérisé par le fait que la chambre annulaire (18) présente entre les parois latérales ou la paroi latérale une largeur de section transversale comprise entre 5 et 10 % du diamètre intérieur du pot (14) disposé à l'intérieur du réservoir et / ou que l'espace (15) réalisé au-dessous du fond (16) du pot à l'intérieur du réservoir et avec le réservoir (10) forme une chambre inférieure (15) qui est, à l'exception du canal d'admission d'air (21) et des ouvertures de passage d'air (22), dans une large mesure étanche à l'air.

9. Dispositif fumigène selon l'une des revendications 1 à 8, caractérisé par le fait que le fond (16) du pot disposé à l'intérieur du réservoir se termine à peu près dans le domaine du bord inférieur du réservoir extérieur, le font du pot intérieur présentant tout autour un collet (32) qui est relié avec le bord inférieur du réservoir extérieur ou qui repose sur une surface d'appui annulaire (41) y disposée et dirigée vers l'intérieur du réservoir et / ou que le bord supérieur du pot intérieur (14) se termine à peine sous le niveau déterminé par le bord du couvercle fermé.

10. Dispositif fumigène selon l'une des revendications 1 à 9, caractérisé par le fait que celui-ci est conçu en tant que dispositif portatif et / ou qu'il est muni d'une poignée en étrier (25) qui est réalisée de préférence en tant que dispositif de suspension.
